# FASCICULE DE BREVET EUROPEEN

(11) **EP 3 967 887 B1**
(45) Date de publication et mention de la délivrance du brevet: **18.06.2025**
(21) Numéro de dépôt: 21196037.2
(22) Date de dépôt: 10.09.2021
(51) Int. Cl.: F16B 5/02, F16B 37/06, F16B 43/00, B60R 9/058

(54) **MOYEN DE FIXATION DE BARRE DE TOIT POUR VÉHICULE**
BEFESTIGUNGSMITTEL FÜR FAHRZEUGDACHTRÄGER
MEANS FOR ATTACHING A ROOF BAR FOR A VEHICLE

(30) Priorité: 15.09.2020 FR 2009309
(43) Date de publication de la demande: 16.03.2022
(73) Titulaire: Renault s.a.s, 92100 Boulogne Billancourt (FR)
(72) Inventeur: BENFARES, Ali, 75012 Paris (FR)
(74) Mandataire: Renault Group

(56) Documents cités:
- EP-A1- 2 174 836
- EP-A1- 3 199 405
- EP-A1- 3 495 672
- DE-A1- 102011 054 861
- FR-A3- 2 920 015
- US-A1- 2019 003 502

## Description

### Domaine technique de l'invention

L'invention concerne un agencement pour la fixation d'une barre de toit sur un pavillon de véhicule. L'invention porte encore sur une caisse de véhicule comprenant un tel agencement. L'invention porte encore sur un véhicule comprenant une telle caisse et/ou un tel agencement. L'invention porte enfin sur un procédé d'obtention d'une telle caisse de véhicule.

### Etat de la technique antérieure

Un véhicule, en particulier un véhicule automobile, comprend des barres de toit fixées sur la caisse du véhicule avec des vis de fixation traversant le pavillon. Des perçages sont ménagés dans le pavillon pour permettre les passages de telles vis de fixation. De tels perçages requièrent une étanchéité afin d'éviter l'intrusion d'eau dans l'habitacle. Cette étanchéité est généralement obtenue grâce à des joints.

Toutefois, lors du serrage des vis de fixations des barres de toit sur le pavillon, de tels joints sont pris en sandwich entre la barre de toit et le pavillon. Cela engendre l'écrasement des joints d'étanchéité ce qui provoque des déformations majeures du pavillon, en particulier de la tôle fine supérieure. Pour masquer de telles déformations majeures, des rainures, généralement embouties, sont pratiquées sur le pavillon. Ces rainures représentent un surcoût et dégradent l'esthétique. De plus, malgré ces rainures, des déformations mineures subsistent et détériorent le niveau d'étanchéité. En outre, de telles déformations, bien qu'elles soient mineures, sont visibles à l'œil ce qui rend le véhicule non conforme en termes de qualité perçue. Le document EP2174836A1 divulgue un agencement connu.

### Présentation de l'invention

Le but de l'invention est de fournir un agencement remédiant aux inconvénients ci-dessus. En particulier, l'invention propose une solution permettant d'éviter de pratiquer des rainures sur le pavillon.

### Résumé de l'invention

L'invention est un agencement selon la revendication 1.

Pour atteindre cet objectif, l'invention porte sur un agencement pour véhicule, notamment pour véhicule automobile, comprenant un pavillon, une barre de toit et un moyen de fixation de la barre de toit sur le pavillon, le pavillon comprenant une première tôle et une deuxième tôle s'étendant parallèlement ou sensiblement parallèlement l'une par rapport à l'autre, notamment une première tôle et une deuxième tôle s'étendant dans des plans longitudinaux et transversaux ou sensiblement longitudinaux et transversaux, le moyen de fixation :
- s'étendant selon un axe principal perpendiculaire ou sensiblement perpendiculaire à la première tôle et à la deuxième tôle,
- comprenant une entretoise réglable suivant l'axe principal du moyen de fixation, l'entretoise réglable étant agencée entre la première tôle et la deuxième tôle, et
- comprenant un écrou fixé à la barre de toit, notamment fixé à la barre de toit par sertissage, une vis, la vis étant apte à coopérer avec l'écrou après avoir traversé la deuxième tôle, l'entretoise réglable et la première tôle, l'entretoise réglable étant destinée à s'étendre sous l'action du vissage de la vis au sein de l'entretoise réglable de sorte à venir au contact de la première tôle et de la deuxième tôle.

L'entretoise réglable comprend un fût taraudé, notamment un fût taraudé fixe par rapport à la deuxième tôle, et un cylindre fileté, le cylindre fileté pouvant coopérer avec le fût taraudé de sorte à dévisser le cylindre fileté par rapport au fût taraudé au cours du vissage de la vis dans l'entretoise réglable.

Le cylindre fileté peut comprendre une partie axiale tubulaire, notamment fixée au cylindre fileté, notamment par collage.

La partie axiale tubulaire peut être en matière souple, notamment en mousse, la partie axiale tubulaire pouvant comprendre un alésage de diamètre inférieur au diamètre de filetage de la vis, notamment un diamètre compris entre 3 mm et 5 mm, de préférence de l'ordre de 4 mm, notamment un diamètre de filetage de la vis compris entre 5 mm et 7 mm, de préférence de l'ordre de 6 mm.

Le fût taraudé peut comprendre un épaulement cylindrique, la deuxième tôle pouvant comprendre un moyen de positionnement de l'épaulement cylindrique, notamment un évidement circulaire ou un trou circulaire, de sorte à centrer le fût taraudé par rapport à la deuxième tôle.

L'agencement peut comprendre un moyen de maintien en position de l'entretoise réglable sur la deuxième tôle, notamment un anneau magnétique, notamment un anneau magnétique fixé préalablement sur le fût taraudé, notamment par collage.

L'agencement peut comprendre un moyen de guidage de l'entretoise réglable par rapport à la deuxième tôle, notamment des ergots ou des emboutis ménagés dans la deuxième tôle.

L'agencement peut comprendre une butée de l'entretoise réglable par rapport à la deuxième tôle, notamment un embouti ou un ergot ou un bossage ménagé dans la deuxième tôle.

L'agencement peut comprendre un moyen d'étanchéité entre la barre de toit et la première tôle, notamment une rondelle d'appui dotée d'un joint, notamment une rondelle d'appui dotée d'un joint fixée sur la barre de toit.

L'agencement peut comprendre une rondelle sous la tête de la vis et/ou le filetage de la vis peut avoir une extrémité pointue.

L'invention porte encore sur une caisse de véhicule, notamment de véhicule automobile, comprenant au moins un agencement tel que défini précédemment.

L'invention porte encore sur un véhicule, notamment un véhicule automobile, comprenant une caisse telle que définie précédemment, et/ou un agencement tel que défini précédemment.

L'invention porte encore sur un procédé d'obtention d'une caisse telle que définie précédemment ou d'un véhicule tel que défini précédemment, comprenant une étape de fourniture de :
- une barre de toit, notamment une barre de toit munie d'un écrou fixé sur la barre de toit,
- une entretoise réglable,
- une caisse de véhicule comprenant un pavillon comprenant une deuxième tôle, et éventuellement une première tôle, la deuxième tôle comprenant un moyen de positionnement de l'entretoise réglable par rapport à la deuxième tôle et/ou un moyen de maintien en position de l'entretoise réglable par rapport à la deuxième tôle et/ou un moyen de guidage de l'entretoise réglable par rapport à la deuxième tôle et/ou une butée de l'entretoise réglable par rapport à la deuxième tôle,

une étape de guidage de l'entretoise réglable par rapport à la deuxième tôle par coopération du fût taraudé de l'entretoise réglable avec le moyen de guidage et/ou avec la butée,
une étape de positionnement et de maintien de l'entretoise réglable par rapport à la deuxième tôle par coopération du fût taraudé avec le moyen de positionnement et/ou le moyen de maintien en position, notamment par aimantation, éventuellement suivie par une étape de fixation de la première tôle, notamment par soudage, notamment sur la deuxième tôle,
une étape de vissage de la vis dans l'entretoise réglable, notamment dans la partie axiale tubulaire de sorte à entraîner la partie axiale tubulaire en rotation et à dévisser le cylindre fileté par rapport au fût taraudé et à faire venir le cylindre fileté au contact de la première tôle,
une étape de vissage de la vis dans l'écrou de sorte à assurer le maintien de la barre de toit par rapport au pavillon.

### Présentation des figures

Ces objets, caractéristiques et avantages de la présente invention seront exposés en détail dans la description suivante d'un mode de réalisation faite à titre non-limitatif en relation avec les figures jointes parmi lesquelles :
[Fig. 1] La figure 1 est une vue schématique d'un véhicule automobile selon un mode de réalisation.
[Fig. 2] La figure 2 est une section partielle selon un plan vertical et transversal d'un agencement selon un mode de réalisation.
[Fig. 3] La figure 3 est une section partielle selon un plan vertical et longitudinal d'un agencement selon un mode de réalisation.
[Fig. 4] La figure 4 est une vue partielle de détail en perspective d'un pavillon et d'une entretoise réglable de l'agencement selon le mode de réalisation.
[Fig. 5] La figure 5 est une vue en perspective éclatée partielle de l'agencement selon le mode de réalisation.
[Fig. 6] La figure 6 est une section partielle selon un plan vertical et longitudinal de l'agencement selon le mode de réalisation.
[Fig. 7] La figure 7 est une vue en perspective d'une partie axiale tubulaire de l'entretoise réglable selon le mode de réalisation.
[Fig. 8] La figure 8 est une section partielle selon un plan vertical et longitudinal de l'agencement selon le mode de réalisation, l'axe d'une vis étant excentré de la partie axiale tubulaire de l'entretoise réglable.
[Fig. 9] La figure 9 est une section partielle selon un plan vertical et longitudinal de l'agencement selon le mode de réalisation.
[Fig. 10] La figure 10 est une vue partielle en perspective d'une coupe selon un plan vertical et longitudinal de l'agencement selon le mode de réalisation, avant insertion de la vis dans la partie axiale tubulaire de l'entretoise réglable.
[Fig. 11] La figure 11 est une vue partielle de détail en perspective de l'entretoise réglable et d'un pavillon selon une variante du mode de réalisation.

### Description détaillée

La direction selon laquelle un véhicule, notamment un véhicule automobile, se déplace en ligne droite est définie comme étant la direction longitudinale X. Par convention, la direction perpendiculaire à la direction longitudinale, située dans un plan parallèle au sol, est nommée direction transversale Y. La troisième direction, perpendiculaire aux deux autres, est nommée direction verticale Z. Ainsi, on utilise un repère direct XYZ dans lequel X est la direction longitudinale dans le sens avant-arrière du véhicule, donc dirigée vers l'arrière, Y est la direction transversale dirigée vers la droite et Z est la direction verticale dirigée vers le haut. Le sens avant correspond au sens dans lequel le véhicule se déplace habituellement dans la direction longitudinale et est opposé au sens arrière.

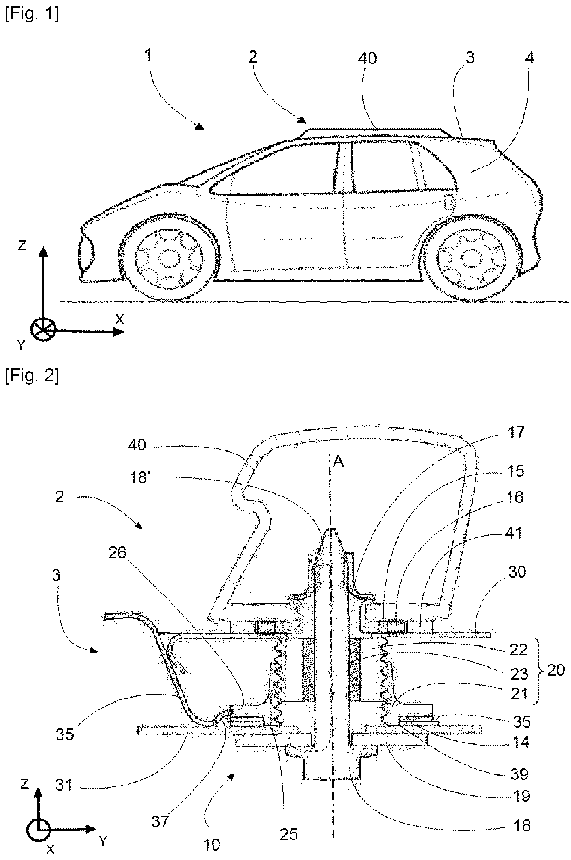

La figure 1 illustre schématiquement un véhicule, de préférence un véhicule automobile 1. Le véhicule 1 comprend une caisse ou structure de caisse 4. Le véhicule 1 comprend un toit ou pavillon 3. Le véhicule 1 ou la caisse 4 comprend un agencement 2 qui sera détaillé par la suite.

Le véhicule 1 ou l'agencement 2 comprend au moins une barre de toit 40, de préférence en alliage d'aluminium. Avantageusement, le véhicule comprend deux barres de toit 40, voire davantage, par exemple parallèles entre elles. Par exemple, l'au moins une barre de toit 40 s'étend longitudinalement ou sensiblement longitudinalement. Alternativement, l'au moins une barre de toit 40 s'étend transversalement ou sensiblement transversalement.

Plus précisément, comme illustré notamment sur la figure 2, l'agencement 2 comprend un pavillon 3, une barre de toit 40 et un moyen de fixation 10 de la barre de toit 40 sur le pavillon 3.

Dans le mode de réalisation illustré, la barre de toit 40 s'étend longitudinalement ou sensiblement longitudinalement, de préférence à gauche du véhicule.

Le pavillon 3 comprend une première tôle 30 et une deuxième tôle 35. Par exemple, la première tôle 30 s'étend au moins partiellement au-dessus de la deuxième tôle 35. De préférence, la première tôle 30 et la deuxième tôle 35 s'étendent parallèlement ou sensiblement parallèlement l'une par rapport à l'autre. Par exemple, la première tôle 30 et la deuxième tôle 35 s'étendent dans des plans longitudinaux et transversaux ou sensiblement longitudinaux et transversaux. Avantageusement le pavillon 3 ou la caisse 4 comprend une troisième tôle 31, par exemple de type renfort, illustrée notamment sur les figures 2 à 6 et 8 à 11. Cette troisième tôle 31 est par exemple fixée à la deuxième tôle 35 afin de rigidifier la deuxième tôle 35. La fixation entre la troisième tôle 31 et la deuxième tôle 35 est par exemple assurée par soudage, par exemple par points. Avantageusement, la troisième tôle 31 s'étend, au moins partiellement, au-dessous de la deuxième tôle 35.

Le moyen de fixation 10 s'étend selon un axe principal A perpendiculaire ou sensiblement perpendiculaire à la première tôle 30 et à la deuxième tôle 35. Le moyen de fixation 10 comprend une entretoise réglable 20 suivant l'axe principal A. L'entretoise réglable 20 est agencée de préférence entre la première tôle 30 et la deuxième tôle 35. Le moyen de fixation 10 comprend un écrou 17, de préférence fixé à la barre de toit 40. Par exemple, l'écrou 17 a un diamètre extérieur de l'ordre de 17 mm.

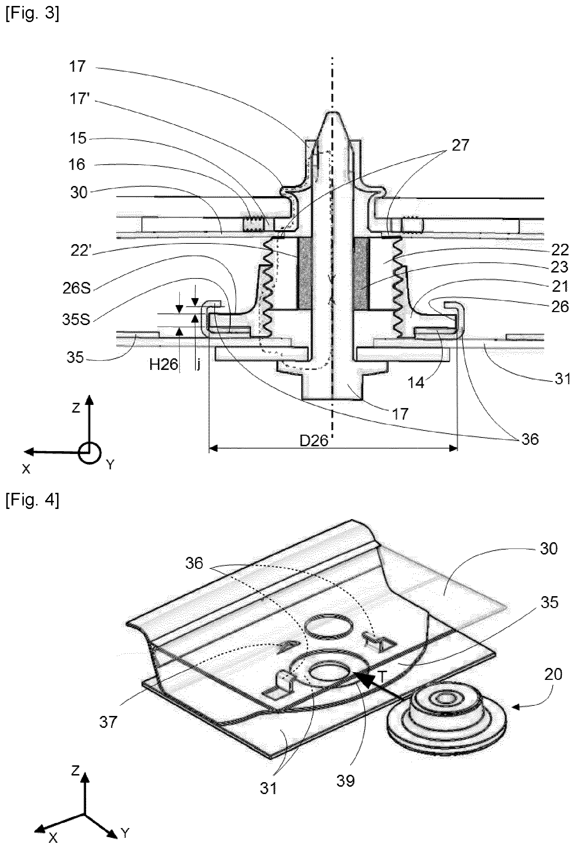

Avantageusement, l'écrou 17 est fixé à la barre de toit 40 par sertissage. Par exemple, comme illustré en particulier sur la figure 3, l'écrou 17 comprend une partie 17' apte à s'étendre radialement sous l'effet d'une compression axiale. L'écrou 17 est de préférence de type RIVKLE (marque déposée).

Le moyen de fixation 10 comprend encore une vis 18. La vis 18 est apte à coopérer avec l'écrou 17 après avoir traversé la deuxième tôle 35, l'entretoise réglable 20 et la première tôle 30, et éventuellement la troisième tôle 31.

Comme il sera expliqué par la suite, l'entretoise réglable 20 est destinée à s'étendre suivant l'axe principal A sous l'action du vissage de la vis 18 au sein de l'entretoise réglable 20 de sorte à venir au contact de la première tôle 30 et de la deuxième tôle 35.

Plus précisément, l'entretoise réglable 20 comprend un fût taraudé 21. L'entretoise réglable 20 comprend un cylindre fileté 22. Le filetage du cylindre fileté 22 coopère avec le taraudage du fût taraudé 21 de sorte à dévisser le cylindre fileté 22 par rapport au fût taraudé 21 au cours du vissage de la vis 18 dans l'entretoise réglable 20. Par exemple, le taraudage du fût taraudé est obtenu par fluotaraudage. Par exemple, le taraudage du fût et le filetage du cylindre ont un pas M20. Par exemple, la hauteur du fût taraudé est égale ou sensiblement égale à la hauteur du cylindre fileté, par exemple de l'ordre de 10 mm.

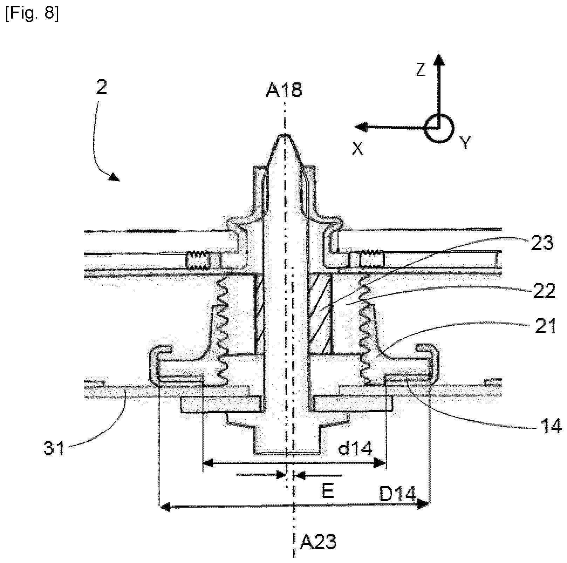

Avantageusement le fût taraudé 21 est fixe par rapport à la deuxième tôle 35, le cylindre fileté 22 étant donc mobile. Ainsi, de préférence, l'agencement 2 comprend un moyen de maintien en position de l'entretoise réglable 20 sur la deuxième tôle 35. Par exemple, comme illustré en particulier sur la figure 8, le moyen de maintien en position est un anneau magnétique 14, autrement dit un aimant en forme de rondelle par exemple. L'aimant est par exemple à base de néodyme. L'anneau magnétique a un diamètre intérieur d14, par exemple de l'ordre de 24 mm. L'anneau magnétique a un diamètre extérieur D14, par exemple de l'ordre de 36 mm. Avantageusement, l'anneau magnétique 14 est fixé préalablement sur le fût taraudé 21, par exemple par collage. Ainsi, le fût taraudé est maintenu par l'aimant 14 sur la deuxième tôle 35 comme il sera expliqué par la suite.

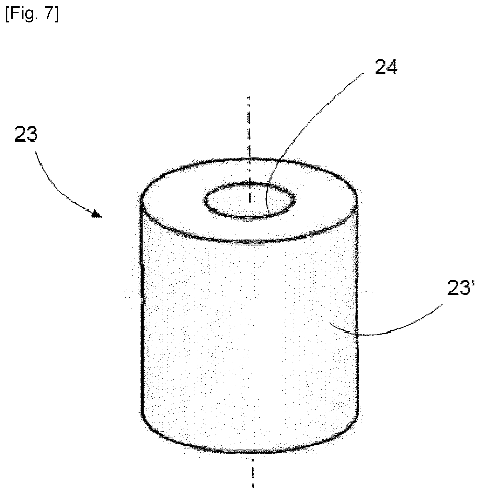

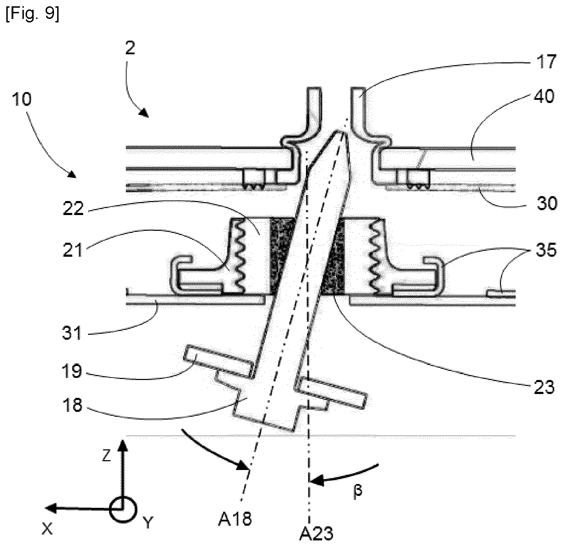

Comme illustré sur les figures 2, 3, 5, 6, 8, 9 et 10, le cylindre fileté 22 comprend une partie axiale tubulaire 23 coaxiale ou sensiblement coaxiale au cylindre fileté. De préférence, la partie axiale tubulaire 23 est fixée au cylindre fileté 22, par exemple par collage. Plus précisément, comme illustré sur la figure 3, le cylindre fileté 22 comprend un alésage 22' coopérant avec une surface cylindrique externe 23' de la partie axiale tubulaire 23 illustrée sur la figure 7. Par exemple, le diamètre de l'alésage 22' est de l'ordre de 10 mm. Par exemple, la hauteur du cylindre fileté 22 est égale, ou sensiblement égale, à la hauteur de la partie axiale tubulaire 23. Avantageusement, la partie axiale tubulaire 23 est en matière souple, par exemple en mousse, par exemple de type BULATEX (marque déposée). La partie axiale tubulaire 23 comprend un alésage 24 de diamètre inférieur au diamètre de filetage de la vis 18. Par exemple, le diamètre de l'alésage 24 est compris entre 3 mm et 5 mm, de préférence de l'ordre de 4 mm. Le diamètre de filetage de la vis 18 est par exemple compris entre 5 mm et 7 mm, de préférence de l'ordre de 6 mm. A noter que la souplesse de cette mousse est apte à absorber des dispersions dimensionnelles suivant les directions longitudinale X et transversale Y ainsi que des dispersions angulaires lors du pilotage de la vis associée au cylindre fileté qui sera détaillé par la suite. En termes de dispersions angulaires représentées par l'angle β sur la figure 9, la mousse peut permettre d'atteindre un angle de l'ordre de 14 degrés par exemple entre l'axe A23 de la partie axiale tubulaire 23 non contrainte et l'axe A18 de la vis 18 en conditions de montage avec dispersions géométriques. Un écart d'alignement E illustré sur la figure 8 entre l'axe A23 de la partie axiale tubulaire 23 non contrainte et l'axe A18 de la vis 18 peut également être rattrapé grâce à la matière de la partie tubulaire axiale de l'entretoise réglable. Cet écart d'alignement E est par exemple de l'ordre de 2 mm.

De préférence, le fût taraudé 21 comprend un épaulement cylindrique 25 référencé sur la figure 2. La deuxième tôle 35 comprend alors un moyen de positionnement de l'épaulement cylindrique 25, par exemple un évidement circulaire ou un trou circulaire 39 référencé sur les figures 2 et 4. Ainsi, l'épaulement cylindrique 25 coopère avec le trou circulaire 39 de sorte à centrer le fût taraudé 21 par rapport à la deuxième tôle 35.

Le fût taraudé 21 comprend de préférence une portion cylindrique externe 26 de diamètre extérieur D26 et de hauteur H26 selon la direction de l'axe principal A, illustrée notamment sur la figure 3. Par exemple, le diamètre D26 est compris entre 30 mm et 42 mm, de préférence de l'ordre de 36 mm. La hauteur H26 est par exemple comprise entre 2 mm et 4 mm, de préférence de l'ordre de 3 mm. Ainsi, le fût taraudé comprend une surface annulaire supérieure 26S de diamètre extérieur D26. De préférence, le diamètre D26 est égal ou sensiblement égal au diamètre D14 de l'anneau magnétique 14. De préférence, le diamètre de l'épaulement cylindrique 25 est tout juste inférieur au diamètre intérieur d14 de l'anneau magnétique de sorte à permettre l'insertion de l'anneau magnétique au fond de l'épaulement 25. Par exemple, le diamètre de l'épaulement cylindrique 25 et le diamètre d14 de l'aimant sont de l'ordre de 24 mm. Par exemple, les diamètres D26 et D14 sont identiques ou sensiblement identiques.

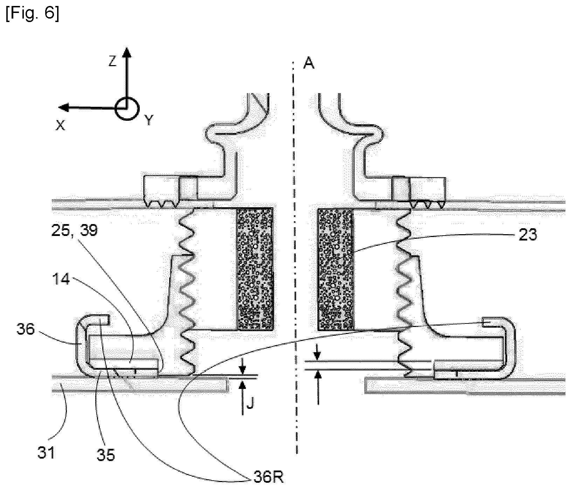

L'agencement 2 comprend encore un moyen de guidage de l'entretoise réglable 20 par rapport à la deuxième tôle 35. Par exemple, le moyen de guidage comprend des ergots 36 ou guides d'approche ménagés dans la deuxième tôle 35 comme illustré en particulier sur les figures 3 et 4. De préférence, le nombre d'ergots 36 est pair de sorte à guider l'entretoise réglable entre deux ergots agencés en face à face. Ainsi, il peut y avoir deux ergots 36 comme illustré, ou quatre, ou davantage si besoin. De préférence, comme illustré sur la figure 6, les ergots 36 comprennent des rabats 36R. Avantageusement, les rabats 36R s'étendent perpendiculairement ou sensiblement perpendiculairement à l'axe principal A, en direction de l'axe principal A. Les rabats 36R s'étendent à une hauteur, depuis une face 35S de la deuxième tôle 35 supérieure à la hauteur H26 de la portion cylindrique externe 26 du fût taraudé. Par exemple, un jeu j (illustré sur la figure 3) entre les rabats 36R et la portion cylindrique externe 26 est de l'ordre de 1 mm, par exemple de 0.9 mm. A noter que les extrémités des rabats 36R sont distants d'une valeur inférieure au diamètre D26 de la portion cylindrique externe 26. Ainsi, le fût taraudé est retenu par les rabats au contact de sa portion cylindrique externe 26 en cas de déplacement du fût selon l'axe principal A en direction de l'écrou 17.

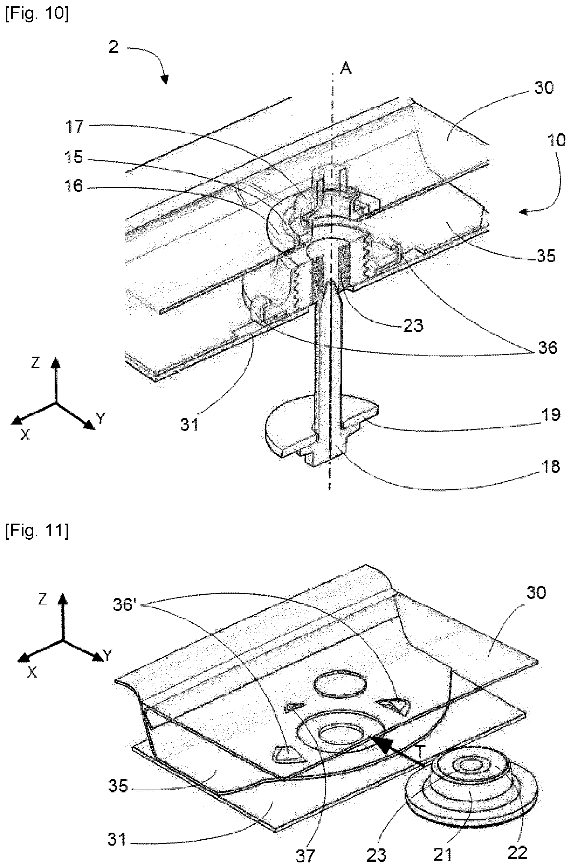

Alternativement, comme illustré sur la figure 11, le moyen de guidage comprend des emboutis 36' ménagés dans la deuxième tôle 35. De préférence, le nombre d'emboutis 36' est pair de sorte à guider l'entretoise réglable entre deux emboutis agencés en face à face. Ainsi, il peut y avoir deux emboutis 36' comme illustré, ou quatre, ou davantage si besoin.

Comme il sera détaillé par la suite, la portion cylindrique externe 26 est ainsi apte à coopérer avec les ergots 36 ou emboutis 36' pour guider l'entretoise réglable par rapport à la deuxième tôle 35.

L'agencement 2 comprend de préférence une butée de l'entretoise réglable 20 par rapport à la deuxième tôle 35. Par exemple, cette butée est un embouti 37, comme illustré sur les figures 2, 4 et 11.

Alternativement, cette butée de fin de course selon la direction transversale dans le mode de réalisation illustré, peut être un ergot ou un bossage ménagé dans la deuxième tôle 35.

Alternativement, cette butée peut être ménagée dans la troisième tôle 31, par exemple en traversant la deuxième tôle 35 via un orifice ménagé à cet effet (configuration non illustrée).

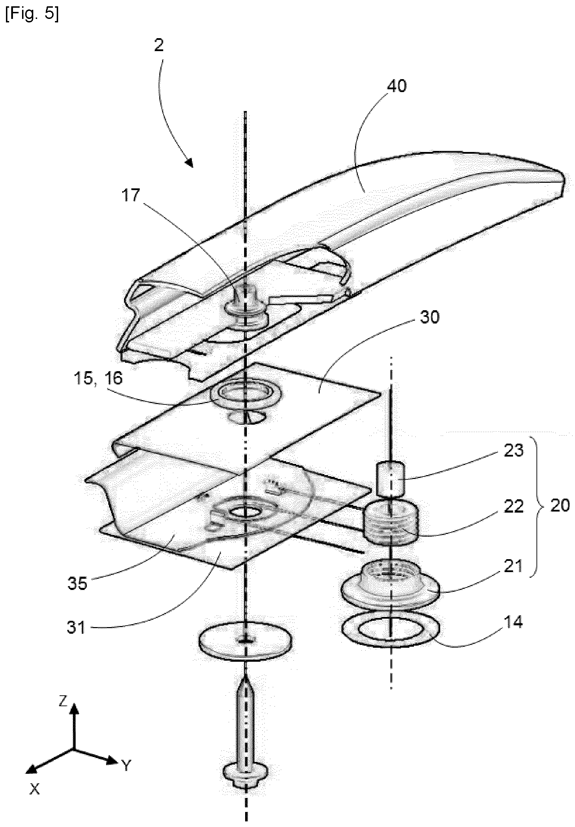

Avantageusement, l'agencement 2 comprend un moyen d'étanchéité entre la barre de toit 40 et la première tôle 30. Ce moyen d'étanchéité est par exemple une rondelle d'appui 15 qui est équipée d'un joint 16 comme illustré notamment sur les figures 2 et 5. Par exemple, le joint 16 s'étend radialement depuis une partie cylindrique externe de la rondelle d'appui. De préférence, la rondelle d'appui 15 dotée du joint 16 est fixée ou intégrée sur la barre de toit 40. Par exemple, la surface de la rondelle 15 et/ou la surface du joint 16 destinée(s) à venir au contact de la barre de toit 40 sont collée(s) à la barre de toit. De préférence, la partie annulaire du joint venant au contact de la première tôle 30 comprend des stries ou gorges ou lèvres circulaires, concentriques par rapport à l'axe de la rondelle, aptes à être comprimées au montage. Par exemple, la rondelle 15 a un diamètre intérieur de l'ordre de 17 mm et un diamètre extérieur de l'ordre de 21 mm. Le joint 16 s'étend radialement par exemple jusqu'à un diamètre extérieur de l'ordre de 27 mm. Par exemple, l'épaisseur de la rondelle 15 est sensiblement identique à l'épaisseur de la partie de l'écrou 17 autour de laquelle la rondelle se positionne. Cette épaisseur est par exemple de l'ordre de 2 mm.

Avantageusement, l'agencement 2 comprend encore une rondelle 19 agencée sous la tête de la vis 18. Par exemple, la rondelle a un diamètre extérieur de l'ordre de 26 mm de sorte à permettre un appui en vis-à-vis ou sensiblement en vis-à-vis de la base du fût 21 et une absorption de la dispersion dimensionnelle. Avantageusement, la vis et/ou le filetage de la vis 18 a une extrémité pointue 18', comme illustré en particulier sur la figure 2.

Un mode d'exécution d'un procédé d'obtention de la caisse 4 de véhicule va maintenant être décrit.

Le procédé d'obtention comprend tout d'abord une étape de fourniture de la barre de toit 40, de l'entretoise réglable 20 et de la caisse 4 comprenant le pavillon 3. Pour rappel, le pavillon 3 comprend au moins la deuxième tôle 35, éventuellement la première tôle 30, voire éventuellement la troisième tôle 31. La deuxième tôle 35 comprend le moyen de positionnement de l'entretoise réglable 20 par rapport à la deuxième tôle 35 et/ou le moyen de maintien en position de l'entretoise réglable 20 par rapport à la deuxième tôle 35 et/ou le moyen de guidage de l'entretoise réglable par rapport à la deuxième tôle 35 et/ou la butée de l'entretoise réglable par rapport à la deuxième tôle 35. Ainsi, avantageusement, la deuxième tôle 35 comprend les ergots 36 et/ou l'embouti 37 et/ou l'évidement 39 de réception de l'épaulement 25 du fût taraudé 21. De préférence, la deuxième tôle 35 est en tôle d'acier de sorte à permettre l'aimantation de l'aimant 14.

Avantageusement, l'écrou 17 et/ou la rondelle 15 dotée du joint 16 ont été préalablement fixés sur la barre de toit 40. L'écrou 17 a été par exemple serti sur la barre de toit. La rondelle 15 et/ou le joint 16 a été par exemple collé sur la barre de toit 40.

Comme illustré en particulier sur les figures 4 et 11 (translation T illustrée par une flèche en gras), le procédé comprend ensuite une étape de guidage de l'entretoise réglable 20 par rapport à la deuxième tôle 35 par coopération du fût taraudé 21 de l'entretoise réglable 20 avec le moyen de guidage et/ou avec la butée. Plus précisément, ce guidage est réalisé par translation de la portion cylindrique externe 26 du fût taraudé 21 de diamètre externe D26 et de hauteur H26 entre les ergots 36 ou emboutis 36'. Cette translation T, en cas de barre de toit 40 s'étendant longitudinalement, s'effectue par exemple selon la direction transversale ou sensiblement selon cette direction, de préférence dans un plan transversal et longitudinal. En cas d'ergots 36 comprenant les rabats 36R, les rabats limitent voire empêchent une translation du fût taraudé selon l'axe principal A ou sensiblement selon cet axe, par exemple selon la direction verticale, en venant au contact contre la surface annulaire supérieure 26S du fût taraudé 21. La translation T de l'entretoise réglable 20 est arrêtée par la butée de type embouti 37 par exemple. Plus précisément, comme illustré sur la figure 2, la portion cylindrique externe 26 du fût taraudé 21 vient au contact de l'embouti 37 ce qui stoppe la course de translation entre les deux ergots 36 vue précédemment.

Ensuite, on procède à une étape de positionnement et de maintien de l'entretoise réglable 20 par rapport à la deuxième tôle 35. Cette étape se fait par coopération du fût taraudé 21 avec le moyen de positionnement et/ou le moyen de maintien en position de type aimant. A noter que de préférence l'anneau magnétique 14 est collé préalablement au fond de l'épaulement 25 du fût taraudé 21. Ainsi, dès lors que le fût taraudé équipé de l'anneau magnétique 14 arrive au contact de la butée 37, tout en étant guidé par les emboutis 36, l'anneau magnétique est attiré par la deuxième tôle 35 au sein de l'évidement circulaire 39 ce qui positionne, plaque et centre le fût taraudé et par conséquent l'entretoise réglable 20 par rapport à la deuxième tôle 35. Comme illustré sur la figure 6, l'épaulement 25 vient ainsi se centrer dans l'évidement 39 de la deuxième tôle 35. A noter qu'un jeu J entre le fût et la troisième tôle 31 subsiste de préférence dans un premier temps. Ce jeu J est par exemple de l'ordre de 0.2 mm et correspond à la somme des épaisseurs de la deuxième tôle 35 et de l'anneau magnétique 14 à laquelle on retranche la profondeur de l'épaulement 25.

Eventuellement, on procède à une étape de fixation de la première tôle 30, c'est-à-dire de la tôle supérieure visible sur le pavillon, sur la deuxième tôle 35 et/ou sur la troisième tôle 31 et/ou sur un autre élément, tel qu'un brancard par exemple (non illustré). Cette étape de fixation est par exemple réalisée par soudage.

L'entretoise réglable étant positionnée, on approche la barre de toit 40 et on procède ensuite à une étape de vissage de la vis 18 dans l'entretoise réglable 20. Dans un premier temps, on enfile la rondelle 19 sur le filetage de la vis 18 de sorte à la positionner sous la tête de la vis. On insère la vis à travers la troisième tôle 31, ajourée et/ou percée à cet effet. On insère ensuite le bout pointu 18' de la vis 18 dans la partie axiale tubulaire 23. Grâce à l'aimant 14 et/ou aux emboutis 36 et/ou à la butée 37, l'entretoise réglable 20 est maintenue et reste en place même en cas de manœuvre brutale de la vis 18 par un opérateur. Pour rappel, le diamètre du filetage de la vis est supérieur au diamètre de l'alésage 24 ménagé dans la partie axiale tubulaire 23 si bien que la vis ne peut pas traverser librement la partie axiale tubulaire. Ainsi, lorsque la vis 18 entre dans la partie axiale tubulaire, la vis dilate ou gonfle l'alésage 24 et se coince partiellement dans cet alésage. On entraîne ensuite en rotation la vis 18 coincée dans la partie axiale tubulaire ce qui permet d'entraîner ou piloter le cylindre fileté 22 en rotation et a pour effet de dévisser le cylindre fileté du fût taraudé 21. En effet, pour rappel la partie axiale tubulaire, en mousse de préférence, est fixée au sein du cylindre fileté. Le dévissage du cylindre fileté 22 par rapport au fût taraudé 21 engendre un déplacement du cylindre fileté 22 jusqu'à ce qu'il vienne au contact de la première tôle 30.

Une fois le cylindre au contact de la première tôle du pavillon, on poursuit le vissage ce qui a pour effet de visser la vis 18 dans l'écrou 17. A noter que l'extrémité pointue 18' facilite l'engagement du filetage de la vis dans l'écrou 17, en particulier en cas de défaut d'alignement entre l'axe de l'écrou et l'axe de la vis, comme illustré sur la figure 9. Comme évoqué précédemment, la matière de la partie axiale tubulaire 23 participe également à rattraper l'éventuel écart d'alignement E et/ou l'éventuel écart angulaire β entre l'axe A23 de la partie tubulaire 23 et l'axe A18 de la vis 18, comme illustré sur les figures 8 et 9.

Le vissage de la vis 18 au sein de l'écrou 17 plaque l'écrou 17 et la rondelle 15 combinée au joint 16 contre la première tôle 30 ce qui assure le maintien de la barre de toit 40 par rapport au pavillon 3. De préférence, le couple de serrage de la vis est tel qu'on applique un effort axial selon l'axe principal A de l'ordre de 800daN. Dans ces conditions l'anneau magnétique s'écrase de l'ordre de 0.2 mm. En effet, l'anneau magnétique est de préférence dans un matériau souple. Ainsi, lorsque l'agencement est assemblé, le jeu J est de préférence rattrapé. Une face inférieure du fût 21 est alors de préférence en contact avec la troisième tôle 31. La barre de toit au niveau de ce moyen de fixation est fixée solidement au pavillon 3.

A noter qu'en cas de fixation préalable de la première tôle 30 sur la deuxième tôle 35 et/ou sur la troisième tôle 31 et/ou sur un autre élément, tel qu'un brancard par exemple (non illustré), par exemple par soudage, les entretoises réglables 20 peuvent être mises en place au moment de l'assemblage des barres de toit, depuis l'intérieur du véhicule.

Bien qu'on ne décrit qu'un seul moyen de fixation, une seule barre de toit 40 peut avoir au moins deux moyens de fixation 10, voire davantage, de préférence quatre.

Concernant la figure 9, la vis 18 est insérée au sein de la partie axiale tubulaire 23 alors que le cylindre fileté 22 est vissé au sein du fût taraudé 21 jusqu'au contact de la troisième tôle 31. De préférence, cette configuration ne peut s'obtenir qu'après une étape de dévissage de la vis 18 par rapport à l'écrou 17, suivie d'une rotation de la vis dans le même sens générant un vissage du cylindre fileté 22 dans le fût taraudé 21.

Avantageusement, comme illustré sur la figure 2, un élément 41, par exemple de type mousse, peut être interposé entre la barre de toit et la première tôle 30 du pavillon.

La solution est particulièrement adaptée aux barres de toit qui affleurent le pavillon, autrement dit sans pied de fixation apparent, généralement connues sous le terme anglo-saxon « flush ». Ces barres de toit ont ou donnent l'impression d'avoir l'intégralité de leur surface inférieure en contact avec le pavillon.

Bien que la barre de toit soit fixée sur le pavillon du véhicule avec des vis traversant le pavillon, l'étanchéité est optimale et évite toute intrusion d'eau dans l'habitacle, même en cas de nettoyage du véhicule avec un jet à haute pression.

La reprise d'effort axial entre la première tôle 30 et la deuxième tôle 35 est assurée par l'entretoise réglable. En effet, comme illustré sur la figure 3, le cylindre fileté 22 est au contact de la première tôle 30, via une surface annulaire 27 qui soutient et évite toute déformation de la première tôle 30. Le fût taraudé appuie quant à lui, par l'intermédiaire de sa portion cylindrique externe 26 sur laquelle est positionné l'aimant 14, sur la deuxième tôle 35. Pour rappel, de préférence, le serrage des vis 18 est assuré à un couple conséquent permettant d'atteindre un effort axial rattrapant le jeu J entre le fond du fût taraudé et la troisième tôle par exemple (illustré sur la figure 6). Ainsi, en cas de jeu J rattrapé, le fond du fût taraudé 22 et la troisième tôle 31 sont également en contact. Ainsi, le serrage des vis ne transmet pas d'effort tendant à déformer la première tôle 30. En outre, le joint 16 fixé autour de la rondelle 15, placé entre la barre de toit 40 et la première tôle 30, a un écrasement limité à l'épaisseur de la rondelle 15. Ainsi, bien que le joint soit pris en sandwich entre la première tôle et la barre de toit et que l'effort axial de maintien de la barre de toit 40 sur le pavillon 3 soit conséquent, la première tôle 30, à savoir la tôle supérieure visible, ne se déforme pas.

La figure 3 illustre, via une représentation en pointillés, la chaîne d'efforts liés au serrage entre la vis 18 et l'écrou 17. Cette chaîne de serrage passe de préférence de l'écrou 17 à la tôle 30, puis au cylindre fileté 22 via la surface annulaire 27, puis au fût taraudé 21 via le filetage/taraudage, puis à la troisième tôle 31. Si le jeu J n'est pas rattrapé, le serrage se transmet à l'aimant 14 et à la deuxième tôle 35. Le serrage passe ensuite à la rondelle 19, puis à la tête de vis 18.

Ainsi, grâce à cette reprise d'efforts, il n'est pas nécessaire de ménager de rainure, généralement de type embouti, sur la tôle supérieure. En effet, aucune déformation due au(x) serrage(s) et/ou écrasement(s) de(s) joint(s) ne se produit. On peut alors s'affranchir de simulations par calculs des déformations liées à l'étanchéité du pavillon. Il en résulte un gain de temps dans le cycle de conception du véhicule, l'économie des coûts et du temps de ces calculs, l'absence de problèmes de corrélations entre calculs et essais. De plus des renforts longitudinaux sous le pavillon peuvent être supprimés soit un gain en masse, par exemple de l'ordre de 2.6 kg.

A noter qu'un jeu de 0.2 mm par exemple entre le filetage du cylindre fileté 22 et le taraudage du fût 21 est prévu afin de permettre des pivotements (à l'instar d'une rotule) entre le fût et le cylindre. Il devient alors possible d'absorber des dispersions géométriques, notamment en termes de parallélisme entre la première tôle 30 et la deuxième tôle 35 et/ou entre la première tôle 30 et la troisième tôle 31. Par exemple, ce jeu dans l'entretoise réglable 20 absorbe un défaut de parallélisme de l'ordre de 1 degré. Un jeu supérieur permettant d'absorber davantage de défaut est également envisageable.

La solution apporte une fiabilité accrue dans l'étanchéité du pavillon au niveau des fixations des barres de toit sur le pavillon.

La solution est particulièrement adaptée aux véhicules équipés de barres de toit de type « flush », notamment en alliage d'aluminium.

En remarque, la solution selon l'invention atteint donc l'objectif recherché de permettre la fixation de barre de toit sur le pavillon d'un véhicule sans engendrer de déformation du pavillon et présente les avantages suivants :
- elle est économique ;
- elle est facile à mettre en œuvre.

## Revendications

1. Agencement (2) pour véhicule, notamment pour véhicule automobile (1), comprenant un pavillon (3), une barre de toit (40) et un moyen de fixation (10) de la barre de toit (40) sur le pavillon (3), le pavillon (3) comprenant une première tôle (30) et une deuxième tôle (35) s'étendant parallèlement ou sensiblement parallèlement l'une par rapport à l'autre, notamment une première tôle (30) et une deuxième tôle (35) s'étendant dans des plans longitudinaux et transversaux ou sensiblement longitudinaux et transversaux,
le moyen de fixation (10) :
- s'étendant selon un axe principal (A) perpendiculaire ou sensiblement perpendiculaire à la première tôle (30) et à la deuxième tôle (35),
- comprenant une entretoise réglable (20) suivant l'axe principal (A) du moyen de fixation (10), l'entretoise réglable (20) étant agencée entre la première tôle (30) et la deuxième tôle (35), et
- comprenant un écrou (17) fixé à la barre de toit (40), notamment fixé à la barre de toit (40) par sertissage, une vis (18), la vis (18) étant apte à coopérer avec l'écrou (17) après avoir traversé la deuxième tôle (35), l'entretoise réglable (20) et la première tôle (30), **caractérisé en ce que** l'entretoise réglable (20) est destinée à s'étendre sous l'action du vissage de la vis (18) au sein de l'entretoise réglable (20) de sorte à venir au contact de la première tôle (30) et de la deuxième tôle (35), dans lequel l'entretoise réglable (20) comprend un fût taraudé (21), notamment un fût taraudé (21) fixe par rapport à la deuxième tôle (35), et un cylindre fileté (22), le cylindre fileté (22) coopérant avec le fût taraudé (21) de sorte à dévisser le cylindre fileté (22) par rapport au fût taraudé (21) au cours du vissage de la vis (18) dans l'entretoise réglable (20), **caractérisé en ce que** le cylindre fileté (22) est au contact de la première tôle (30) via une surface annulaire (27) située à l'extrémité axiale du cylindre fileté soutenant et évitant toute déformation de la première tôle (30).

2. Agencement (2) selon la revendication précédente, **caractérisé en ce que** le cylindre fileté (22) comprend une partie axiale tubulaire (23), notamment fixée au cylindre fileté (22), notamment par collage.

3. Agencement (2) selon la revendication précédente, **caractérisé en ce que** la partie axiale tubulaire (23) est en matière souple, notamment en mousse, la partie axiale tubulaire (23) comprenant un alésage (24) de diamètre inférieur au diamètre de filetage de la vis (18), notamment un diamètre compris entre 3 mm et 5 mm, de préférence de l'ordre de 4 mm, notamment un diamètre de filetage de la vis (18) compris entre 5 mm et 7 mm, de préférence de l'ordre de 6 mm.

4. Agencement (2) selon l'une des revendications 1 à 3, **caractérisé en ce que** le fût taraudé (21) comprend un épaulement cylindrique (25), la deuxième tôle (35) comprenant un moyen de positionnement de l'épaulement cylindrique (25), notamment un évidement circulaire ou un trou circulaire (39), de sorte à centrer le fût taraudé (21) par rapport à la deuxième tôle (35).

5. Agencement (2) selon l'une des revendications 1 à 4, **caractérisé en ce que** l'agencement (2) comprend un moyen de maintien en position de l'entretoise réglable (20) sur la deuxième tôle (35), notamment un anneau magnétique (14), notamment un anneau magnétique (14) fixé préalablement sur le fût taraudé (21), notamment par collage.

6. Agencement (2) selon l'une des revendications précédentes, **caractérisé en ce que** l'agencement (2) comprend un moyen de guidage de l'entretoise réglable (20) par rapport à la deuxième tôle (35), notamment des ergots (36) ou des emboutis (36') ménagés dans la deuxième tôle (35).

7. Agencement (2) selon l'une des revendications précédentes, **caractérisé en ce que** l'agencement (2) comprend une butée de l'entretoise réglable (20) par rapport à la deuxième tôle (35), notamment un embouti (37) ou un ergot ou un bossage ménagé dans la deuxième tôle (35).

8. Agencement (2) selon l'une des revendications précédentes, **caractérisé en ce que** l'agencement (2) comprend un moyen d'étanchéité entre la barre de toit (40) et la première tôle (30), notamment une rondelle d'appui (15) dotée d'un joint (16), notamment une rondelle d'appui (15) dotée d'un joint (16) fixée sur la barre de toit (40).

9. Agencement (2) selon l'une des revendications précédentes, **caractérisé en ce que** l'agencement (2) comprend une rondelle (19) sous la tête de la vis (18) et/ou le filetage de la vis (18) a une extrémité pointue (18').

10. Caisse (4) de véhicule, notamment de véhicule automobile (1), **caractérisée en ce qu'**elle comprend au moins un agencement (2) selon l'une des revendications précédentes.

11. Véhicule (1), notamment véhicule automobile (1), **caractérisé en ce qu'**il comprend une caisse (4) selon la revendication précédente, et/ou un agencement (2) selon l'une des revendications 1 à 9.

12. Procédé d'obtention d'une caisse (4) selon la revendication 10 ou d'un véhicule selon la revendication 11, **caractérisé en ce qu'**il comprend une étape de fourniture de :
- une barre de toit (40), notamment une barre de toit (40) munie d'un écrou (17) fixé sur la barre de toit (40),
- une entretoise réglable (20),
- une caisse (4) de véhicule (1) comprenant un pavillon (3) comprenant une deuxième tôle (35), et éventuellement une première tôle (30), la deuxième tôle (35) comprenant un moyen de positionnement de l'entretoise réglable (20) par rapport à la deuxième tôle (35) et/ou un moyen de maintien en position de l'entretoise réglable (20) par rapport à la deuxième tôle (35) et/ou un moyen de guidage de l'entretoise réglable (20) par rapport à la deuxième tôle (35) et/ou une butée de l'entretoise réglable (20) par rapport à la deuxième tôle (35),
une étape de guidage de l'entretoise réglable (20) par rapport à la deuxième tôle (35) par coopération du fût taraudé (21) de l'entretoise réglable (20) avec le moyen de guidage et/ou avec la butée,
une étape de positionnement et de maintien de l'entretoise réglable (20) par rapport à la deuxième tôle (35) par coopération du fût taraudé (21) avec le moyen de positionnement et/ou le moyen de maintien en position, notamment par aimantation, éventuellement suivie par une étape de fixation de la première tôle (30), notamment par soudage, notamment sur la deuxième tôle (35),
une étape de vissage de la vis (18) dans l'entretoise réglable (20), notamment dans la partie axiale tubulaire (23) de sorte à entraîner la partie axiale tubulaire (23) en rotation et à dévisser le cylindre fileté (22) par rapport au fût taraudé (21) et à faire venir le cylindre fileté (22) au contact de la première tôle (30),
une étape de vissage de la vis (18) dans l'écrou (17) de sorte à assurer le maintien de la barre de toit (40) par rapport au pavillon (3).

## Patentansprüche

1. Anordnung (2) für ein Fahrzeug, insbesondere für ein Kraftfahrzeug (1), mit einem Dach (3), einem Dachträger (40) und einem Mittel (10) zur Befestigung des Dachträgers (40) auf dem Dach (3), wobei das Dach (3) ein erstes Blech (30) und ein zweites Blech (35) umfasst, die sich parallel oder im Wesentlichen parallel zueinander erstrecken, wobei sich insbesondere ein erstes Blech (30) und ein zweites Blech (35) in Längs- und Querrichtungen oder im Wesentlichen in Längs- und Querrichtungen erstrecken,
wobei das Befestigungsmittel (10):
- sich entlang einer zum ersten Blech (30) und zum zweiten Blech (35) senkrechten oder im Wesentlichen senkrechten Hauptachse (A) erstreckt,
- einen entlang der Hauptachse (A) des Befestigungsmittels (10) einstellbaren Abstandhalter (20) umfasst, wobei der einstellbare Abstandhalter (20) zwischen dem ersten Blech (30) und dem zweiten Blech (35) angeordnet ist, und
- eine Mutter (17), die am Dachträger (40) befestigt ist, insbesondere durch Bördeln am Dachträger (40) befestigt ist, und eine Schraube (18) umfasst, wobei die Schraube (18) dazu geeignet ist, mit der Mutter (17) zusammenzuwirken, nachdem sie das zweite Blech (35), den einstellbaren Abstandhalter (20) und das erste Blech (30) durchquert hat, **dadurch gekennzeichnet, dass** der einstellbare Abstandhalter (20) dazu bestimmt ist, sich unter der Einschraubwirkung der Schraube (18) innerhalb des einstellbaren Abstandhalters (20) auszudehnen, um mit dem ersten Blech (30) und dem zweiten Blech (35) in Kontakt zu kommen, wobei der einstellbare Abstandhalter (20) einen mit Innengewinde versehenen Schaft (21), insbesondere einen in Bezug auf das zweite Blech (35) feststehenden, mit Innengewinde versehenen Schaft (21), und einen mit Außengewinde versehenen Zylinder (22) umfasst, wobei der mit Außengewinde versehene Zylinder (22) mit dem mit Innengewinde versehenen Schaft (21) zusammenwirkt, um den mit Außengewinde versehenen Zylinder (22) während des Einschraubens der Schraube (18) in den einstellbaren Abstandhalter (20) in Bezug auf den mit Innengewinde versehenen Schaft (21) herauszuschrauben, **dadurch gekennzeichnet, dass** der mit Außengewinde versehene Zylinder (22) über eine ringförmige Fläche (27) mit dem ersten Blech (30) in Kontakt steht, die sich am axialen Ende des mit Außengewinde versehenen Zylinders befindet, die das erste Blech (30) stützt und eine Verformung desselben verhindert.

2. Anordnung (2) nach dem vorangehenden Anspruch, **dadurch gekennzeichnet, dass** der mit Außengewinde versehene Zylinder (22) einen rohrförmigen axialen Abschnitt (23) umfasst, der insbesondere an dem mit Außengewinde versehenen Zylinder (22) befestigt ist, insbesondere durch Kleben.

3. Anordnung (2) nach dem vorangehenden Anspruch, **dadurch gekennzeichnet, dass** der rohrförmige axiale Abschnitt (23) aus weichem Material, insbesondere aus Schaum, gefertigt ist, wobei der rohrförmige axiale Abschnitt (23) eine Bohrung (24) mit einem Durchmesser umfasst, der kleiner als der Gewindedurchmesser der Schraube (18) ist, insbesondere mit einem Durchmesser zwischen 3 mm und 5 mm, vorzugsweise in der Größenordnung von 4 mm, wobei der Gewindedurchmesser der Schraube (18) insbesondere zwischen 5 mm und 7 mm beträgt, vorzugsweise in der Größenordnung von 6 mm.

4. Anordnung (2) nach einem der Ansprüche 1 bis 3, **dadurch gekennzeichnet, dass** der mit Innengewinde versehene Schaft (21) eine zylindrische Schulter (25) umfasst, wobei das zweite Blech (35) ein Mittel zum Positionieren der zylindrischen Schulter (25), insbesondere eine kreisförmige Ausnehmung oder ein kreisförmiges Loch (39), umfasst, um den mit Innengewinde versehenen Schaft (21) in Bezug auf das zweite Blech (35) zu zentrieren.

5. Anordnung (2) nach einem der Ansprüche 1 bis 4, **dadurch gekennzeichnet, dass** die Anordnung (2) ein Mittel zum Inpositionhalten des einstellbaren Abstandhalters (20) auf dem zweiten Blech (35) umfasst, insbesondere einen Magnetring (14), insbesondere einen Magnetring (14), der zuvor an dem mit Innengewinde versehenen Schaft (21) befestigt wurde, insbesondere durch Kleben.

6. Anordnung (2) nach einem der vorangehenden Ansprüche, **dadurch gekennzeichnet, dass** die Anordnung (2) ein Mittel zum Führen des einstellbaren Abstandhalters (20) in Bezug auf das zweite Blech (35) umfasst, insbesondere im zweiten Blech (35) vorgesehene Nasen (36) oder Vertiefungen (36').

7. Anordnung (2) nach einem der vorangehenden Ansprüche, **dadurch gekennzeichnet, dass** die Anordnung (2) einen Anschlag des einstellbaren Abstandhalters (20) in Bezug auf das zweite Blech (35) umfasst, insbesondere eine im zweiten Blech (35) vorgesehene Vertiefung (37) oder Nase oder Erhebung.

8. Anordnung (2) nach einem der vorangehenden Ansprüche, **dadurch gekennzeichnet, dass** die Anordnung (2) ein Dichtungsmittel zwischen dem Dachträger (40) und dem ersten Blech (30) umfasst, insbesondere eine mit einer Dichtung (16) versehene Stützscheibe (15), insbesondere eine am Dachträger (40) befestigte, mit einer Dichtung (16) versehene Stützscheibe (15).

9. Anordnung (2) nach einem der vorangehenden Ansprüche, **dadurch gekennzeichnet, dass** die Anordnung (2) unter dem Kopf der Schraube (18) eine Scheibe (19) umfasst und/oder das Gewinde der Schraube (18) ein spitzes Ende (18') aufweist.

10. Karosserie (4) eines Fahrzeugs, insbesondere eines Kraftfahrzeugs (1), **dadurch gekennzeichnet, dass** sie mindestens eine Anordnung (2) nach einem der vorangehenden Ansprüche umfasst.

11. Fahrzeug (1), insbesondere Kraftfahrzeug (1), **dadurch gekennzeichnet, dass** es eine Karosserie (4) nach dem vorangehenden Anspruch und/oder eine Anordnung (2) nach einem der Ansprüche 1 bis 9 umfasst.

12. Verfahren zum Erhalten einer Karosserie (4) nach Anspruch 10 oder eines Fahrzeugs nach Anspruch 11, **dadurch gekennzeichnet, dass** es einen Schritt des Bereitstellens folgender Elemente umfasst:
- eines Dachträgers (40), insbesondere eines Dachträgers (40), der mit einer am Dachträger (40) befestigten Mutter (17) versehen ist,
- eines einstellbaren Abstandhalters (20),
- einer Karosserie (4) eines Fahrzeugs (1) mit einem Dach (3), das ein zweites Blech (35) und gegebenenfalls ein erstes Blech (30) umfasst, wobei das zweite Blech (35) ein Mittel zum Positionieren des einstellbaren Abstandhalters (20) in Bezug auf das zweite Blech (35) und/oder ein Mittel zum Inpositionhalten des einstellbaren Abstandhalters (20) in Bezug auf das zweite Blech (35) und/oder ein Mittel zum Führen des einstellbaren Abstandhalters (20) in Bezug auf das zweite Blech (35) und/oder einen Anschlag des einstellbaren Abstandhalters (20) in Bezug auf das zweite Blech (35) umfasst,
einen Schritt des Führens des einstellbaren Abstandhalters (20) in Bezug auf das zweite Blech (35) durch Zusammenwirken des mit Innengewinde versehenen Schafts (21) des einstellbaren Abstandhalters (20) mit dem Mittel zum Führen und/oder mit dem Anschlag,
einen Schritt des Positionierens und Haltens des einstellbaren Abstandhalters (20) in Bezug auf das zweite Blech (35) durch Zusammenwirken des mit Innengewinde versehenen Schafts (21) mit dem Mittel zum Positionieren und/oder dem Mittel zum Inpositionhalten, insbesondere durch Magnetisierung, gegebenenfalls gefolgt von einem Schritt des Befestigens des ersten Blechs (30), insbesondere durch Schweißen, insbesondere am zweiten Blech (35),
einen Schritt des Einschraubens der Schraube (18) in den einstellbaren Abstandhalter (20), insbesondere in den rohrförmigen axialen Abschnitt (23), um den rohrförmigen axialen Abschnitt (23) in Drehung zu versetzen und den mit Außengewinde versehenen Zylinder (22) in Bezug auf den mit Innengewinde versehenen Schaft (21) herauszuschrauben und den mit Außengewinde versehenen Zylinder (22) mit dem ersten Blech (30) in Kontakt zu bringen,
einen Schritt des Einschraubens der Schraube (18) in die Mutter (17), um den Halt des Dachträgers (40) in Bezug auf das Dach (3) zu gewährleisten.

## Claims

1. Arrangement (2) for a vehicle, in particular for a motor vehicle (1), comprising a roof (3), a roof bar (40) and a fixing means (10) for fixing the roof bar (40) to the roof (3), the roof (3) comprising a first sheet (30) and a second sheet (35) extending parallel or substantially parallel to one another, in particular a first sheet (30) and a second sheet (35) extending in longitudinal and transverse or substantially longitudinal and transverse planes,
the fixing means (10):
- extending along a main axis (A) perpendicular or substantially perpendicular to the first sheet (30) and to the second sheet (35),
- comprising an adjustable spacer (20) along the main axis (A) of the fixing means (10), the adjustable spacer (20) being arranged between the first sheet (30) and the second sheet (35), and
- comprising a nut (17) fixed to the roof bar (40), in particular fixed to the roof bar (40) by crimping, and a screw (18), the screw (18) being able to cooperate with the nut (17) after having passed through the second sheet (35), the adjustable spacer (20) and the first sheet (30), **characterized in that** the adjustable spacer (20) is intended to extend under the action of screwing the screw (18) inside the adjustable spacer (20) so as to come into contact with the first sheet (30) and with the second sheet (35), wherein the adjustable spacer (20) comprises a tapped barrel (21), in particular a tapped barrel (21) that is fixed in relation to the second sheet (35), and a threaded cylinder (22), the threaded cylinder (22) cooperating with the tapped barrel (21) such that the threaded cylinder (22) is unscrewed from the tapped barrel (21) during screwing of the screw (18) into the adjustable spacer (20), **characterized in that** the threaded cylinder (22) is in contact with the first sheet (30) via an annular surface (27) that is located at the axial end of the threaded cylinder and supports, and prevents any deformation of, the first sheet (30).

2. Arrangement (2) according to the preceding claim, **characterized in that** the threaded cylinder (22) comprises a tubular axial part (23), which is in particular fixed to the threaded cylinder (22), in particular by adhesive bonding.

3. Arrangement (2) according to the preceding claim, **characterized in that** the tubular axial part (23) is made of flexible material, in particular of foam, the tubular axial part (23) comprising a bore (24) with a diameter that is smaller than the thread diameter of the screw (18), in particular a diameter of between 3 mm and 5 mm, preferably of around 4 mm, in particular a thread diameter of the screw (18) of between 5 mm and 7 mm, preferably of around 6 mm.

4. Arrangement (2) according to one of Claims 1 to 3, **characterized in that** the tapped barrel (21) comprises a cylindrical shoulder (25), the second sheet (35) comprising a means for positioning the cylindrical shoulder (25), in particular a circular recess or a circular hole (39), so as to centre the tapped barrel (21) in relation to the second sheet (35).

5. Arrangement (2) according to one of Claims 1 to 4, **characterized in that** the arrangement (2) comprises a means for holding the adjustable spacer (20) in position on the second sheet (35), in particular a magnetic ring (14), in particular a magnetic ring (14) that is fixed beforehand to the tapped barrel (21), in particular by adhesive bonding.

6. Arrangement (2) according to one of the preceding claims, **characterized in that** the arrangement (2) comprises a means for guiding the adjustable spacer (20) in relation to the second sheet (35), in particular lugs (36) or stamped portions (36') formed in the second sheet (35).

7. Arrangement (2) according to one of the preceding claims, **characterized in that** the arrangement (2) comprises a stop for the adjustable spacer (20) in relation to the second sheet (35), in particular a stamped portion (37) or a lug or a boss formed in the second sheet (35).

8. Arrangement (2) according to one of the preceding claims, **characterized in that** the arrangement (2) comprises a sealing means between the roof bar (40) and the first sheet (30), in particular a thrust washer (15) that is provided with a seal (16), in particular, a thrust washer (15) that is provided with a seal (16) and fixed to the roof bar (40).

9. Arrangement (2) according to one of the preceding claims, **characterized in that** the arrangement (2) comprises a washer (19) under the head of the screw (18) and/or the thread of the screw (18) has a pointed end (18').

10. Body (4) of a vehicle, in particular of a motor vehicle (1), **characterized in that** it comprises at least one arrangement (2) according to one of the preceding claims.

11. Vehicle (1), in particular a motor vehicle (1), **characterized in that** it comprises a body (4) according to the preceding claim and/or an arrangement (2) according to one of Claims 1 to 9.

12. Method for obtaining a body (4) according to Claim 10 or a vehicle according to Claim 11, **characterized in that** it comprises a step of providing:
- a roof bar (40), in particular a roof bar (40) provided with a nut (17) fixed to the roof bar (40),
- an adjustable spacer (20),
- a body (4) of a vehicle (1) comprising a roof (3) comprising a second sheet (35), and optionally a first sheet (30), the second sheet (35) comprising a means for positioning the adjustable spacer (20) in relation to the second sheet (35) and/or a means for holding the adjustable spacer (20) in position in relation to the second sheet (35) and/or a means for guiding the adjustable spacer (20) in relation to the second sheet (35) and/or a stop for the adjustable spacer (20) in relation to the second sheet (35),
a step of guiding the adjustable spacer (20) in relation to the second sheet (35) by means of the tapped barrel (21) of the adjustable spacer (20) cooperating with the guiding means and/or with the stop,
a step of positioning and holding the adjustable spacer (20) in relation to the second sheet (35) by means of the tapped barrel (21) cooperating with the positioning means and/or the means for holding in position, in particular by magnetization, optionally followed by a step of fixing the first sheet (30), in particular by welding, in particular to the second sheet (35),
a step of screwing the screw (18) into the adjustable spacer (20), in particular into the tubular axial part (23) so as to rotate the tubular axial part (23) and to unscrew the threaded cylinder (22) from the tapped barrel (21) and to bring the threaded cylinder (22) into contact with the first sheet (30),
a step of screwing the screw (18) into the nut (17) so as to hold the roof bar (40) in relation to the roof (3).
